# EUROPÄISCHE PATENTSCHRIFT

(11) **EP 3 859 351 B1**
(45) Veröffentlichungstag und Bekanntmachung des Hinweises auf die Patenterteilung: **26.04.2023**
(21) Anmeldenummer: 21151802.2
(22) Anmeldetag: 15.01.2021
(51) Int. Cl.: G01P 1/02, G01P 3/488, G01P 3/487

(54) **SCHUTZHÜLSE FÜR EINEN DREHZAHLSENSOR UND DREHZAHLSENSOR MIT SCHUTZHÜLSE**
PROTECTIVE SLEEVE FOR A SPEED SENSOR AND SPEED SENSOR WITH PROTECTIVE SLEEVE
MANCHON DE PROTECTION POUR UN CAPTEUR DE VITESSE DE ROTATION ET CAPTEUR DE VITESSE AVEC MANCHON DE PROTECTION

(30) Priorität: 28.01.2020 DE 102020101937
(43) Veröffentlichungstag der Anmeldung: 04.08.2021
(73) Patentinhaber: KNORR-BREMSE Systeme für Nutzfahrzeuge GmbH, 80809 München (DE)
(72) Erfinder: ROHSE, Tobias, 71701 Schwieberdingen (DE); RAISER, Timo, 71732 Tamm (DE)

(56) Entgegenhaltungen:
- EP-A1- 3 009 811
- DE-A1- 19 612 337
- DE-B4-102007 018 758
- US-A- 5 581 179
- US-A1- 2019 041 418

## Beschreibung

Die vorliegende Erfindung betrifft eine Schutzhülse für einen Drehzahlsensor in Kombination mit einem

Drehzahlsensor, welcher für die erfindungsgemäße Schutzhülse vorgesehen ist. Insbesondere handelt es sich bei dem Drehzahlsensor um einen Raddrehzahlsensor eines Fahrzeugs.

Der Erfassung von Raddrehzahlen von Fahrzeugen kommt in modernen Fahrsicherheitssystemen eine entscheidende Rolle zu. Dazu werden im heutigen Stand der Technik Raddrehzahlsensoren eingesetzt, die die jeweiligen Drehzahlen der Räder erfassen und an ein Steuer- und Auswertegerät übermitteln können. Anhand der Drehzahlinformationen kann ein eventueller Schlupf eines Rades, welcher die Fahrsicherheit beeinträchtigen könnte, erkannt werden und entsprechende Gegenmaßnahmen anhand elektronischer Systeme wie eines Antiblockiersystems oder Antischlupfregelungen eingeleitet werden.

Dabei haben sich zur Raddrehzahlerfassung aktive Drehzahlsensoren im Stand der Technik durchgesetzt, welche, im Gegensatz zu passiven Drehzahlsensoren, mit einem minimalen Strom versorgt werden müssen und daher aktiv betrieben werden. Aktive Drehzahlsensoren, welche auf dem Funktionsprinzip des Halleffekts basieren und bei denen man daher auch von Hallsensoren spricht, sind hierfür weit verbreitet. Die Sensorelemente dieser Sensoren bestehen üblicherweise aus Halbleiterschichten, an welche ein geringer Strom angelegt wird. Wird das Sensorelement durch ein magnetisches Feld bewegt, wird in dem Sensorelement aufgrund der auf die Elektronen wirkenden Lorentzkraft eine Ladungstrennung hervorgerufen, welche in Form eines Spannungssignals (Hallspannung) gemessen werden kann.

Bei Drehzahlsensoren für Fahrzeuge wird das zu messende magnetische Feld in der Regel durch einen Permanentmagneten erzeugt und durch einen sogenannten Encoder (Encoderrad) beeinflusst. Das Encoderrad ist fest mit dem Rad des Fahrzeugs, dessen Drehzahl ermittelt werden soll, verbunden und dreht sich daher mit dessen Drehzahl. Auf dem Encoderrad sind verschiedene Abschnitte definiert, welche eine Veränderung des Magnetfelds hervorrufen. In manchen Ausführungsformen, weist das Encoderrad auf den unterschiedlichen Abschnitten verschieden gepolte Magnete auf, welche mit einem im Drehzahlsensor hinter dem Sensorelement verbauten Permanentmagneten oder einem dort platzierten ferromagnetischen Werkstoff wechselwirken. Je nach Abschnitt ist somit das Magnetfeld in die eine oder die andere Richtung orientiert (Multipol). In einem anderen Beispiel weist der Sensor einen Permanentmagneten auf wobei das Encoderrad aus einem ferromagnetischen Zahnrad besteht. Die unterschiedlichen Abstände zwischen einem Zahn des Zahnrads und dem Permanentmagneten des Sensors auf der einen und einem Zahnzwischenraum des Zahnrads und dem Permanentmagneten des Sensors auf der anderen Seite induzieren eine Änderung des Magnetfelds.

Die Änderung des Magnetfelds wird wie vorstehend beschrieben vom Sensorelement (Hall-Element) erfasst und in ein proportional zur Raddrehzahl schwankendes Spannungssignal umgewandelt. Dieses wird anschließend an eine Steuer- und Auswerteeinheit des Fahrzeugs weitergegeben, anhand derer das Spannungssignal des Sensors durch Filtern, Verstärken, diverse Korrekturfaktoren o.ä. aufbereitet und zu einer Drehzahlinformation des Rades verarbeitet wird anhand derer die Fahrsicherheitssysteme eine Stabilisierung der Fahrsituation vornehmen können.

In manchen Ausführungsformen von Drehzahlsensoren kommen auch zwei oder mehr Sensorelemente zu Anwendung, die nebeneinander angeordnet sind. Dies bringt den Vorteil mit sich, dass aufgrund der unterschiedlichen Positionen der Sensorelemente in Bezug auf den Encoder festgestellt werden kann in welche Richtung sich das Encoderrad und damit das Rad des Fahrzeugs dreht.

Ein typischer Aufbau eines Drehzahlsensors sieht dabei wie folgt aus: das mindestens eine Sensorelement wird am Ende einer Leiterschiene platziert und mit ihr elektrisch verbunden. Ferner wird ein Permanentmagnet hinter dem Sensorelement angeordnet, sodass das Sensorelement zwischen dem Magnet und dem später anzuordnenden Decoder vorgesehen ist. Anschließend werden die einzelnen Bauteile mit Kunststoff umspritzt, sodass die Bauteile des Sensors ohne Lufteinschlüsse in der Kunststoffumspritzung angeordnet sind. Das somit entstandene Kunststoffbauteil mit den integrierten Bestandteilen wird anschließend zum Schutz gegen Schmutz und Feuchtigkeit sowie vor mechanischen Einwirkungen in eine Schutzhülse eingesetzt und mit einem O-Ring an deren Öffnung abgedichtet.

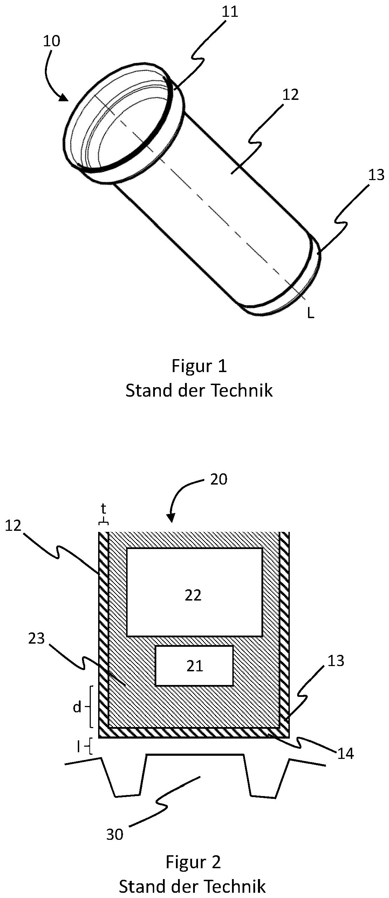

Eine derartige Schutzhülse 10 aus dem Stand der Technik ist in **Fig. 1** abgebildet. Sie setzt sich zusammen aus einem oberen Endabschnitt 11, einer Seitenwand 12 und einem unteren Endabschnitt 13. Alle Abschnitte erstrecken sich mit einem kreisförmigen Querschnitt entlang einer Längsachse L, welche ebenfalls die Symmetrieachse der Schutzhülse 10 darstellt. Während die durch die drei Abschnitte gebildete zylindrische Form am oberen Endabschnitt 11 eine Öffnung aufweist, ist sie auf dem am gegenüberliegenden Ende, also am unteren Endabschnitt, durch eine in der Figur nicht dargestellte Bodenfläche abgeschlossen. Zudem weist die Schutzhülse 10 am oberen Endabschnitt 11 einen größeren Durchmesser als am Rest der Schutzhülse 10 und eine Nut im unteren Endabschnitt 13 auf. Die exakte Form der Schutzhülse 10 ist abhängig von der Form des darin einzusetzenden Drehzahlsensors 20.

Ein Drehzahlsensor 20 (s. Fig. 2) wird durch die Öffnung am oberen Endabschnitt 11 in die Schutzhülse 10 eingesetzt und so weit wie möglich in die Schutzhülse 10 gesteckt. Zudem wird der Spalt am oberen Endabschnitt 11 zwischen Hülse 10 und Sensor 20 mit einem O-Ring (nicht dargestellt) abgedichtet. Somit ist der Sensor 20 vor mechanischen Einwirkungen und Luft- bzw. Flüssigkeits- oder Schmutzeintrag durch die Schutzhülse 10 geschützt.

**Fig. 2** zeigt schematisch den unteren Teil der Schutzhülse aus Fig. 1 in einer Schnittansicht entlang der Längsachse L. Zu sehen ist also die Schutzhülse mit der Seitenwand 12 und dem unteren Endabschnitt 13, sowie einer Bodenfläche 14 der Schutzhülse 10. Die Schutzhülse weist dabei eine konstante Wandstärke t auf. Zudem ist in Fig. 2 ein Drehzahlsensor 20 abgebildet, welcher in die Schutzhülse 10 eingesetzt ist. Dieser weist einen Permanentmagneten 22 sowie ein Sensorelement 21 auf, wobei letzteres über eine nicht abgebildete elektrische Verbindung verfügt, die aus der Schutzhülse 10 in Zeichenebene nach oben hinausführt und die elektrischen Signale vom Sensorelement 21 an eine Auswerteeinheit o.ä. leiten kann. Der Drehzahlsensor 20 weist weiterhin eine Kunststoffumspritzung 23 auf, die das Sensorelement 21 und den Permanentmagneten 22 umschließt und das Volumen zwischen dem Sensorelement 21, dem Permanentmagneten 22 und der Schutzhülse vollständig ausfüllt. Somit befindet sich zwischen Sensorelement 22 und der Bodenfläche 14 der Schutzhülse eine Kunststoffschicht mit der definierten Schichtdicke d.

Zudem ist in Fig. 2 ein ferromagnetisches Zahnrad schematisch dargestellt, welches dem Sensor 20 als Encoderrad bzw. Encoder 30 dient und fest mit einer nicht dargestellten Fahrzeugachse eines Fahrzeugrads verbunden ist. Der Abstand zwischen dem Punkt des Encoderrads 30, welcher sich am nächsten an der Bodenfläche 14 der Schutzhülse 10 befindet, und der Bodenfläche 14 der Schutzhülse 10, wird als Luftspalt I bezeichnet. Aufgrund der ferromagnetischen Eigenschaft des Encoderrads 30, besteht zwischen dem Permanentmagneten 22 des Drehzahlsensors 20 und dem Encoderrad 30 ein magnetisches Feld. Dieses führt durch das oben beschriebene Funktionsprinzip des Sensors zu einer Spannung, welche durch das Sensorelement 21 induziert wird. Dreht sich das Encoderrad 30 zusammen mit dem Rad des Fahrzeugs, dessen Drehzahl ermittelt werden soll, so verändert sich aufgrund der Zahnform des Encoderrads 30 der Abstand zwischen Magnet und Encoderrad, wodurch sich das Magnetfeld und somit auch die in dem Sensorelement 21 induzierte Spannung verändern. Durch den bekannten Abstand der Zähne auf dem Encoderrad 30, kann somit dessen Drehzahl und damit die Drehzahl des Fahrzeugrads ermittelt werden.

In der Praxis kann es schnell zu starken Schwankungen des Luftspalts I kommen, wenn das Encoderrad nicht mit einer hohen Maßgenauigkeit gefertigt wurde oder sich während des Betriebes aufgrund von thermischen oder mechanischen Einwirkungen verformt, was zu einer Verschlechterung der Messergebnisse des Sensors führen kann. Dies stellt hohe Anforderungen an die Qualität des verwendeten Encoderrads sowie an die Toleranzen der Fahrzeugachse, auf der das Encoderrad positioniert ist, was den Fertigungsaufwand und damit die Produktionskosten der entsprechenden Bauteile erhöht. Da sich unter Umständen Abweichungen des Luftspalts erst bei länger im Betrieb befindlichen Bauteilen aufgrund der oben genannten Verformungen oder sonstigen Einflüssen einstellen können, müssen die Bauteile, welche Einfluss auf den Luftspalt haben, häufiger überprüft und Instand gesetzt werden, um einen gleichbleibenden Luftspalt und damit einen einwandfreien Betrieb des Sensors gewährleisten zu können, was Kosten nach sich zieht.

Es ist somit Aufgabe der vorliegenden Erfindung eine Lösung bereitzustellen, anhand derer die Qualitätsanforderungen an den Encoder minimiert werden können. Dies wird durch eine Schutzhülse und einen Drehzahlsensor gemäß Anspruch 1 erzielt.

Vorteilhafte Weiterbildungen der Erfindung sind in den abhängigen Ansprüchen enthalten.

Eine erfindungsgemäße Schutzhülse zur Aufnahme eines Drehzahlsensors mit wenigstens einem Sensorelement weist einen oberen Endabschnitt, eine Seitenwand und einen unteren Endabschnitt auf. Dabei kann die Seitenwand sowohl in den unteren Endabschnitt als auch in den oberen Endabschnitt übergehen. Teile der Seitenwand können somit ebenfalls Bestandteile des unteren und des oberen Endabschnitts bilden. Der obere Endabschnitt ist dabei vorzugsweise dazu konfiguriert elektrische Verbindungen des in der Schutzhülse platzierten Drehzahlsensors durch eine Öffnung aus der Anordnung, vorzugsweise nach oben, hinauszuführen, wobei das obere Ende als dasjenige Ende definiert ist, das dem Ende der Schutzhülse gegenüberliegt, das näher an einem Encoder, welcher beispielsweise in Form eines Encoderrads gegeben sein kann, zu montieren ist. Die Seitenwand schließt sich an den oberen Endabschnitt an und erstreckt sich in Richtung einer Längsachse der Schutzhülse. Der untere Endabschnitt der Schutzhülse schließt sich in Richtung der Längsachse an die Seitenwand an. Dabei kann, wie oben bereits erwähnt, der obere Endabschnitt in die Seitenwand und die Seitenwand in den unteren Endabschnitt übergehen, ohne dass die jeweiligen Abschnitte durch klare geometrische Merkmale voneinander getrennt sind. Erfindungsgemäß weist die Schutzhülse an ihrem unteren Endabschnitt eine Ausnehmung auf.

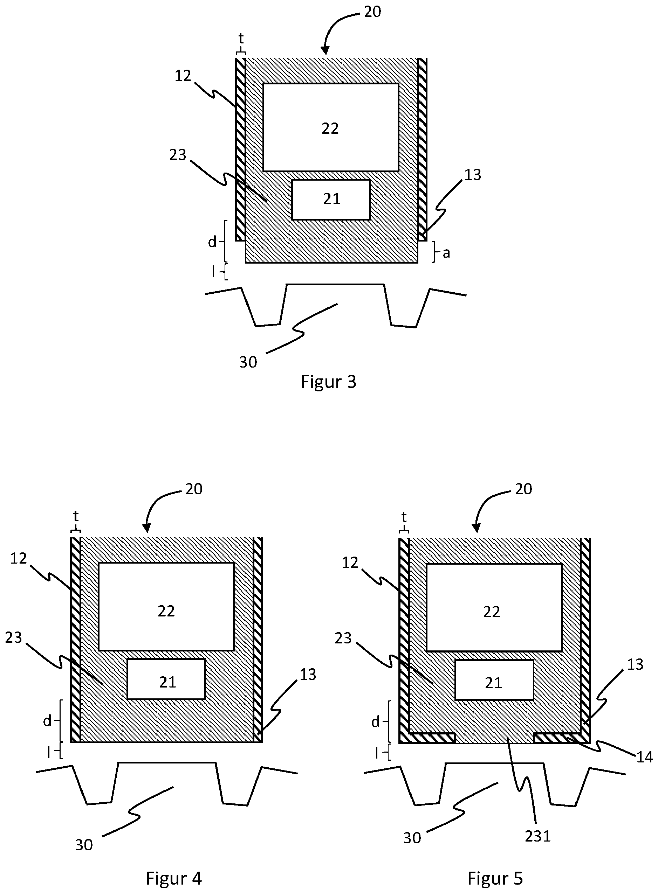

Durch die Ausnehmung im unteren Endabschnitt kann erreicht werden, dass das Sensorelement näher an dem Encoder angeordnet werden kann, was im Folgenden näher erklärt wird. Der Abstand zwischen Encoder und dem am nächsten zum Encoder angeordneten Punkt des Drehzahlsensors mit Schutzhülse (Luftspalt, s.o.) bleibt im Vergleich zu herkömmlichen Lösungen unverändert. Ebenso unverändert bleibt die Schichtdicke der Kunststoffumspritzung, welche sich zwischen Encoder und Sensorelement befindet. Bei gleichem Luftspalt und gleicher Schichtdicke der Kunststoffumspritzung, rutscht somit das Sensorelement um die Dicke der Schutzhülse näher an den Encoder heran (siehe hierzu Erläuterungen zu Fig. 3). Dies bringt den Vorteil mit sich, dass Schwankungen im Luftspalt deutlich besser ausgeglichen werden können und daher auch bei qualitativ schlechteren Encodern eine ausreichend genaue Messung der Raddrehzahl vorgenommen werden kann. Somit sind auch ältere oder günstigere Encoder einsetzbar, was die Beschaffungskosten und/oder die Wartungskosten des Systems aus Encoder und Drehzahlsensor verringert.

In einer nicht beanspruchten Variante ragt der in die Schutzhülse einzusetzende herkömmliche Drehzahlsensor aus der Schutzhülse mit einem festgelegten Abstand aus dem unteren Endabschnitt der Schutzhülse heraus. Somit befindet sich kein Abschnitt der Schutzhülse zwischen Encoderrad und Drehzahlsensor, weshalb die Schutzhülse nur eine seitliche Ummantelung des Drehzahlsensors darstellt und nach unten offen ausgebildet ist. Dies hat den Vorteil, dass eine einfache geometrische Form der Schutzhülse sichergestellt ist, wodurch günstige Fertigungskosten erzielt werden können. Gleichzeitig wird der weit überwiegende Teil des Drehzahlsensors seitlich vor mechanischen Einwirkungen geschützt.

In einer weiteren nicht beanspruchten Variante schließt der Drehzahlsensor bündig mit dem unteren Endabschnitt der Schutzhülse ab. Auch in dieser Ausführungsform ist eine einfache geometrische Form der Schutzhülse gewährleistet, wobei sogar ein noch größerer Teil des Drehzahlsensors seitlich vor mechanischen Einwirkungen geschützt werden kann, da die Schutzhülse sich über die komplette Seitenfläche des Drehzahlsensors erstreckt und somit lediglich die Stirnseite des Drehzahlsensors nicht von der Schutzhülse geschützt wird. Zudem resultiert die Anordnung in einer einfachen Form der Gesamtgeometrie aus Schutzhülse und Drehzahlsensor, in der sich keine Ecken oder Sicken bilden in denen sich Schmutz ablagern und somit die Funktion des Sensors stören oder häufigere Wartung verursachen könnte.

In der beanspruchten Ausführungsform der Erfindung weist der untere Endabschnitt eine Bodenfläche auf, welche dazu konfiguriert ist die Seitenwand in Richtung der Längsachse der Schutzhülse zu begrenzen. Die Ausnehmung am unteren Endabschnitt der Schutzhülse befindet sich in dieser Bodenfläche. Die Ausnehmung ist dabei ferner ebenfalls von der Kunststoffumspritzung ausgefüllt, sodass diese bündig mit der Bodenfläche der Schutzhülse abschließt.

Eine derartige Ausführungsform hat den Vorteil, dass der Drehzahlsensor und insbesondere dessen Kunststoffumspritzung auch von der zum Encoder orientierten Seite vor mechanischen Einwirkungen geschützt sind. Dies ist insbesondere dann von Bedeutung, wenn der Encoder eine Unwucht hat und somit möglicherweise an der Anordnung aus Schutzhülse und Drehzahlsensor schleift, oder im Falle einer möglichen Kalibrierung des Sensors, bei der der Encoder so nah an die Anordnung aus Drehzahlsensor und Schutzhülse angeordnet wird, dass er leicht an der Anordnung schleift (der Luftspalt also gleich 0 gesetzt wird).

In einer vorteilhaften Weiterbildung der zuletzt beschriebenen Ausführungsform ist die Ausnehmung am unteren Endabschnitt der Schutzhülse in der Mitte der Bodenfläche angeordnet. Dies setzt voraus, dass das Sensorelement ebenfalls mittig angeordnet ist und eine Symmetrie um die Längsachse der Schutzhülse erzielt werden kann. Eine symmetrische Anordnung hat dabei insbesondere hinsichtlich der Konstruktion, der Fertigung und der Montage der Bauteile Vorteile, wodurch der Preis für die Herstellung der Anordnung gesenkt werden kann.

In einer vorteilhaften Weiterbildung der Ausführungsform mit einer Ausnehmung in der Bodenfläche der Schutzhülse entspricht die Fläche der Ausnehmung in der Bodenfläche der Schutzhülse mindestens 50% der Stirnfläche des Sensorelements, welche zur Ermittlung der Drehzahl benötigt wird, und/oder maximal 1,3 mal der Stirnfläche des Sensorelements, welche zur Ermittlung der Drehzahl benötigt wird, und bevorzugt exakt dem Anteil der Stirnfläche des Sensorelements, welche zu Ermittlung der Drehzahl benötigt wird. Die Fläche, welche zur Ermittlung der Drehzahl benötigt wird, ist dabei der Anteil der Stirnfläche des Sensorelements, der vom Magnetfeld zwischen Encoder und Magneten oder je nach Ausführungsform ferromagnetischen Element des Drehzahlsensors durchströmt wird und die Induktion der Spannung bewirkt. Diese Fläche entspricht bei den oben beschriebenen Hallsensoren in der Regel der Fläche der Halbleiterschichten des Sensorelements.

Um die Funktion des Wirkprinzips des Drehzahlsensors sicher zu stellen ist eine bestimmte minimale Fläche der Ausnehmung in der Bodenfläche vorzusehen. Auf der anderen Seite, ist eine sinnvolle Obergrenze der Flächengröße festzulegen, um einen ausreichenden Schutz durch die Schutzhülse gewährleisten zu können. Im Idealfall ist die Ausnehmung der Schutzhülse maximal so groß, dass ein sicherer Betrieb des Drehzahlsensors sichergestellt werden kann.

In einer weiteren vorteilhaften Ausführungsform der Erfindung weist die Ausnehmung in der Bodenfläche des unteren Endabschnitts der Schutzhülse die gleiche Form auf wie die Fläche des Sensorelements, welche zur Ermittlung der Drehzahl benötigt wird. Auch hier ist es das Ziel einen möglichst geringen Bereich des Drehzahlsensors ungeschützt zu lassen und gleichzeitig einen sicheren Betrieb des Drehzahlsensors zu gewährleisten. Durch die Ausprägung der Ausnehmung in der gleichen Form wie die Fläche des Sensorelements, kann dies bestmöglich erzielt werden. Der Ausdruck "gleiche Form" bezieht sich dabei auf die mathematische Eigenschaft der Ähnlichkeit, sodass die Ausnehmung in der Bodenfläche durchaus einen abweichenden Flächeninhalt zur Fläche des Sensorelements aufweisen kann.

Ferner kann die Wirkungsweise des Drehzahlsensors verbessert und damit dessen sicherer Betrieb gewährleistet werden, wenn die Ausnehmung in der Bodenfläche und die Fläche des Sensorelements parallel angeordnet werden, was somit eine weitere vorteilhafte Ausführungsform der Erfindung darstellt. Dies ist darauf zurückzuführen, dass in diesem Fall die Schichtdicke der Kunststoffumspritzung über die gesamte Fläche des Sensorelements und damit auch der Luftspalt zwischen Drehzahlsensor und Encoder möglichst konstant sind, was wiederum ein möglichst konstantes Magnetfeld zur Folge hat.

In einer weiteren vorteilhaften Ausgestaltung der Erfindung weist die Schutzhülse eine symmetrische Form auf, wobei die Längsachse der Schutzhülse die Symmetrieachse der Schutzhülse darstellt. Eine symmetrische Form bringt Vorteile hinsichtlich des Fertigungs- und Montageaufwandes mit sich, da eine Orientierung des Bauteils nicht vorgenommen werden muss. Somit lassen sich Zeit und Kosten sparen.

Weiterhin vorteilhaft ist diese Ausführungsform dann, wenn sich die Schutzhülse rund, d.h. mit einem runden Querschnitt quer zur Längsachse, um die Längsachse, welche als Symmetrieachse fungiert, erstreckt. Eine runde Form der Schutzhülse hat den Vorteil, dass sie einfach zu fertigen ist und aufgrund des runden Querschnitts eine stabile Form bei Querbelastungen darstellt.

Ein erfindungsgemäßer Drehzahlsensor, welcher dazu konfiguriert ist, in die für ihn vorgesehene Schutzhülse eingesetzt zu werden, weist mindestens ein Sensorelement auf, das dazu konfiguriert ist, die Drehzahl eines Encoders zu erfassen und diese Drehzahl in ein elektrisches Signal umzuwandeln. Zudem weist ein erfindungsgemäßer Drehzahlsensor eine elektrische Verbindung auf, die dazu konfiguriert ist das vom Sensorelement erfasste elektrische Signal zur weiteren Verarbeitung an einen Empfänger außerhalb des Drehzahlsensors weiterzuleiten. Dort wird das Signal weiter verarbeitet und ausgewertet. Des Weiteren weist der Drehzahlsensor einen Permanentmagnet auf, welcher dazu konfiguriert ist ein magnetisches Feld aufzubauen. Zudem ist das Sensorelement, der Permanentmagnet und die elektrische Verbindung von einer Kunststoffumspritzung umgeben, welche dazu konfiguriert ist die umgebenen Teile zu schützen und deren Anordnung zu fixieren. Die Kunststoffumspritzung weist erfindungsgemäß ferner an ihrem Ende einen Vorsprung auf, der derart ausgestaltet ist, dass er in die am unteren Endabschnitt der Schutzhülse vorgesehene Ausnehmung in einer Weise eingesetzt werden kann, dass die Kunststoffumspritzung bündig mit der Bodenfläche des unteren Endabschnitts der Schutzhülse abschließt.

Ein derartiger Drehzahlsensor wird in die erfindungsgemäße Schutzhülse eingesetzt, wodurch erreicht wird, dass das Sensorelement des Drehzahlsensors um die Dicke der Bodenfläche der Hülse näher an dem Encoder positioniert werden kann, wodurch mögliche Schwankungen im Luftspalt zwischen Encoder und Drehzahlsensor, welche im Betrieb auftreten können, besser ausgeglichen werden können. Dies ermöglicht zum einen den Einsatz auch älterer und damit möglicherweise durch den Betrieb verschlissener oder verformter Encoder. Somit ergibt sich eine längere Lebensleistung für die Encoder, welche gleichzeitig nicht so häufig gewartet werden müssen. Zum anderen können auch qualitativ schlechtere Encoder mit geringerer Fertigungsgenauigkeit eingesetzt werden. Auf diese Weise erlaubt ein erfindungsgemäßer Drehzahlsensor in Verbindung mit einer erfindungsgemäßen Schutzhülse die Verwendung qualitativ schlechterer oder älterer Encoder. Dadurch können sowohl die Kosten bei der Instandhaltung, als auch die Kosten bei der Anschaffung reduziert werden.

Die Erfindung wird anhand der beigefügten Figuren im Folgenden näher erläutert. Die Figuren zeigen im Einzelnen:
- Fig. 1: eine perspektivische Ansicht einer herkömmlichen Schutzhülse für einen Drehzahlsensor
- Fig. 2: eine Schnittansicht eines herkömmlichen Drehzahlsensors in einer herkömmlichen Schutzhülse
- Fig. 3: eine Schnittansicht einer nicht erfindungsgemäßen Schutzhülse mit einem herkömmlichen
- Fig. 4: Drehzahlsensor eine Schnittansicht einer weiteren nicht erfindungsgemäßen Schutzhülse mit einem herkömmlichen Drehzahlsensor
- Fig. 5: eine Schnittansicht einer erfindungsgemäßen Schutzhülse mit einem erfindungsgemäßen Drehzahlsensor

Die Figuren 1 und 2 wurden bereits oben im Detail beschrieben. Daher wird auf eine ausführliche Beschreibung an dieser Stelle verzichtet und lediglich auf die wichtigsten Punkte eingegangen. **Fig. 1** zeigt eine herkömmliche Schutzhülse wie sie aus dem Stand der Technik bekannt ist. Sie erstreckt sich entlang einer Längsachse L, ist rund in ihrem Querschnitt und ist an ihrem einen Ende offen.

**Fig. 2** zeigt lediglich einen Ausschnitt in einer Schnittansicht der Schutzhülse 10 aus Fig. 1 entlang deren Längsachse L. Der gezeigte Ausschnitt liegt dem offenen Ende der Schutzhülse gegenüber und zeigt eine Seitenwand 12 und einen unteren Endabschnitt 13 der Schutzhülse. In der Schutzhülse 10 ist ein Drehzahlsensor 20 vorgesehen. Wie zu erkennen ist, ist die Schutzhülse 10 an dem offenen Ende gegenüberliegenden Ende durch eine Bodenfläche 14 abgeschlossen. Im Anschluss daran ist ein Encoder in Form eines zahnradförmigen Encoderrades 30 skizziert. Zwischen der Bodenfläche 14 und dem Encoderrad 30 befindet sich ein Luftspalt I. Der Drehzahlsensor 20 besteht aus einem Sensorelement 21 und einem Permanentmagneten 22, wobei das Sensorelement 21 zwischen der Bodenfläche 14 und dem Permanentmagneten 22 angeordnet ist.

Der Permanentmagnet 22 und das Sensorelement 21 sind dabei von einer Kunststoffumspritzung 23 umgeben, welche die gesamte Schutzhülse 10 im gezeigten Ausschnitt ausfüllt und die Bestandteile des Drehzahlsensors fixiert.

Die Schichtdicke d der Kunststoffumspritzung zwischen dem Sensorelement 21 und der Bodenfläche 14 hat einen vorbestimmten Betrag, welcher in jeder der Figuren 2 bis 5 identisch ist. Weiterhin weist die Schutzhülse 10 eine konstante vorbestimmte Wandstärke t auf. Der Abstand des Encoderrades 30 zum Sensorelement 21 ist somit festgelegt auf die addierten Werte des Luftspalts I, der Wandstärke t der Bodenfläche 14 der Schutzhülse 10 und der Schichtdicke d der Kunststoffumspritzung 23.

Weist das Encoderrad 30, beispielsweise aufgrund von Verformungen oder eines verschlissenen Zustands größere Formungenauigkeiten auf, kann es während des Betriebs zu größeren Schwankungen des Luftspalts I kommen. Diese können unter Umständen nicht ausgeglichen werden, wodurch das Ergebnis des Drehzahlsensors verfälscht werden kann. Um dies zu verhindern, müssen qualitativ sehr hochwertige und dementsprechend teure Encoderräder eingesetzt werden und/oder eine häufige Wartung/Austausch der betroffenen Teile vorgenommen werden um die Schwankungen des Luftspalts zu minimieren.

**Fig. 3** zeigt eine nicht erfindungsgemäße Ausführungsform einer Schutzhülse 10 in dem aus Fig. 2 bekannten Ausschnitt und mit dem aus Fig. 2 bereits bekannten Drehzahlsensor 20 über einem skizzierten Encoderrad 30. Im Gegensatz zur Schutzhülse 10 aus Fig. 2 weist die Schutzhülse 10 aus Fig. 3 keine Bodenfläche 14 auf und ist somit unten offen. Der Drehzahlsensor 20 mit seiner Kunststoffumspritzung 23 ragt vielmehr um den Abstand a aus dem unteren Endabschnitt 13 der Schutzhülse heraus. Auf diese Weise beträgt der Abstand zwischen Sensorelement 21 und dem Encoderrad 30 lediglich die Schichtdicke d der Kunststoffumspritzung 23, addiert um den Betrag des Luftspalts I. Der Abstand wurde demnach um die Dicke der Wandstärke t der weggelassenen Bodenfläche 14 der Schutzhülse 10 verringert. Somit können Schwankungen im Luftspalt leichter ausgeglichen werden, wodurch die Qualitätsanforderungen hinsichtlich des Encoderrades 30 verringert werden können.

**Fig. 4** zeigt eine zweite nicht erfindungsgemäße Ausführungsform einer Schutzhülse 10 in dem aus Fig. 2 bekannten Ausschnitt und mit dem aus Fig. 2 bekannten Drehzahlsensor 20. Es wird somit an dieser Stelle lediglich auf die Unterschiede zur vorangegangenen ersten Ausführungsform der Erfindung aus Fig. 3 eingegangen. Im Unterschied zu der in Fig. 3 gezeigten Ausführungsform der Erfindung, schließt der Drehzahlsensor 20 bündig mit dem unteren Endabschnitt 13 der Schutzhülse 10 ab. Es kann somit ein größerer Bereich des Drehzahlsensors 20 durch die Schutzhülse 10 abgedeckt und geschützt werden. Zudem weist die entstandene Geometrie im Gegensatz zur Ausführungsform aus Fig. 3 keinen Absatz zwischen Schutzhülse 10 und Drehzahlsensor 20 auf, in denen sich eventuell Schmutz sammeln könnte.

**Fig. 5** zeigt eine Ausführungsform eines Systems aus einer erfindungsgemäßen Schutzhülse 10 und einem erfindungsgemäßen Drehzahlsensor 20'. Die Schutzhülse 10 aus Fig. 5 weist eine Bodenfläche 14 auf, in der eine Ausnehmung angeordnet ist.

Die Ausnehmung ist in der Mitte der Bodenfläche angeordnet und weist eine Fläche auf, die der Stirnfläche des Sensorelements 21 entspricht.

Ferner ist ein Drehzahlsensor 20' vorgesehen, bei dem die Kunststoffumspritzung 23 einen Vorsprung 231 aufweist, welcher exakt der Form der Ausnehmung in der Bodenfläche 14 der Schutzhülse 10 entspricht. Wird der Drehzahlsensor 20' mit seinem Vorsprung 231 in die Schutzhülse 10 eingesetzt, füllt der Vorsprung 231 der Kunststoffumspritzung exakt das Loch in die Ausnehmung in der Bodenfläche 14 der Schutzhülse 10 aus und schließt dabei bündig mit der Bodenfläche 14 ab. Auf diese Weise kann der Abstand des Sensorelements 21 zum Encoderrad 30 ebenfalls um die Wandstärke t der Schutzhülse 10 im Vergleich zu herkömmlichen Schutzhülsen 10 und Drehzahlsensoren 20 reduziert werden und gleichzeitig ein möglichst umfassender Schutz des Drehzahlsensors 20 sicher gestellt werden.

### BEZUGSZEICHENLISTE

- 10: Schutzhülse
- 11: oberer Endabschnitt
- 12: Seitenwand d. Schutzhülse
- 13: unterer Endabschnitt
- 14: Bodenfläche d. Schutzhülse
- 20: Raddrehzahlsensor
- 21: Sensorelement
- 22: Permanentmagnet/ferromagnetisches Element
- 23: Kunststoffumspritzung
- 231: Vorsprung
- 30: Encoder(-element) (Zahnrad)
- L: Längsachse
- a: Abstand vom Drehzahlsensor zur Schutzhülse
- d: Dicke d. Kunststoffumspritzung
- t: Wandstärke der Schutzhülse

## Patentansprüche

1. System aus einem Drehzahlsensor (20) und einer Schutzhülse (10), der Drehzahlsensor aufweisend
einen Permanentmagnet (22), dazu konfiguriert ein magnetisches Feld hervorzurufen,
mindestens ein im Bereich des magnetischen Feldes vorgesehenes Sensorelement (21) dazu konfiguriert die Drehzahl eines dem Drehzahlsensor zugeordneten Encoderelements (30) zu erfassen und in ein elektrisches Signal umzuwandeln,
eine um den Permanentmagneten (22) und das Sensorelement (21) angeordnete Kunststoffumspritzung (23), dazu konfiguriert die umgebenen Teile zu schützen und deren Anordnung zu fixieren,
wobei der Drehzahlsensor (20) dazu konfiguriert ist, in die Schutzhülse (10) eingesetzt zu werden;
die Schutzhülse (10) aufweisend
einen oberen Endabschnitt (11), dazu konfiguriert elektrische Verbindungen des Drehzahlsensors (20) aus der Schutzhülse (10) hinauszuführen
eine Seitenwand (12), welche sich an den oberen Endabschnitt (11) anschließt und sich in Richtung einer Längsachse (L) erstreckt, und
einen unteren Endabschnitt (13), der sich an die Seitenwand (12) anschließt,
wobei die Schutzhülse (10) an ihrem unteren Endabschnitt (13) eine Ausnehmung aufweist und der untere Endabschnitt (13) eine Bodenfläche (14) aufweist, dazu konfiguriert, die Seitenwand (12) in Richtung der Längsachse (L) der Schutzhülse (10) zu begrenzen, und wobei sich die Ausnehmung am unteren Endabschnitt (13) der Schutzhülse (10) in dieser Bodenfläche (14) befindet und nach dem Einsetzen des Drehzahlsensors (20) in die Schutzhülse (10) durch die Kunststoffumspritzung (23) derart ausgefüllt ist, dass die Kunststoffumspritzung (23) und die Bodenfläche (14) bündig abschließen, wobei weiterhin
die Kunststoffumspritzung (23) einen Vorsprung (231) aufweist der derart ausgestaltet ist, dass er in die am unteren Endabschnitt (13) der Schutzhülse (10) geformte Ausnehmung eingesetzt werden kann und nach dem Einsetzen bündig mit der Bodenfläche (14) des unteren Endabschnitts (13) der Schutzhülse (10) abschließt und
die Kunststoffumspritzung (23) derart ausgeführt ist, dass sie nach dem Einsetzen des Drehzahlsensors in die Schutzhülse zwischen Sensorelement (22) und der Bodenfläche (14) der Schutzhülse (10) eine Kunststoffschicht mit einer definierten Schichtdicke d aufweist.

2. System gemäß dem vorhergehenden Anspruch, wobei die Ausnehmung am unteren Endabschnitt (13) der Schutzhülse (10) mittig in der Bodenfläche (14) angeordnet ist.

3. System gemäß einem der vorhergehenden Ansprüche 1 bis 2, wobei die Ausnehmung und die Fläche des Sensorelements (21) nach dem Einsetzen des Drehzahlsensors (20) in die Schutzhülse (10) parallel zueinander angeordnet sind.

4. System gemäß einem der vorhergehenden Ansprüche, wobei die Schutzhülse (10) symmetrisch um die Längsachse (L) mit rundem Querschnitt ausgebildet ist.

5. System gemäß dem vorhergehenden Anspruch, wobei sich die Schutzhülse (10) in Richtung der Längsachse (L) erstreckt.

## Claims

1. A system comprising a speed sensor (20) and a protective sleeve (10), the speed sensor having:
a permanent magnet (22) configured to generate a magnetic field,
at least one sensor element (21) that is provided in the region of the magnetic field and configured to measure the speed of an encoder element (30) assigned to the speed sensor and to convert it into an electrical signal,
a plastic overmoulding (23) that is arranged around the permanent magnet (22) and the sensor element (21) and configured to protect the parts thus encompassed and fix them in place,
the speed sensor (20) being configured to be inserted into the protective sleeve (10),
the protective sleeve (20) having:
an upper end portion (11) that is configured to take electrical connections of the speed sensor (20) out of the protective sleeve (10),
a side wall (12) that connects to the upper end portion (11) and extends in the direction of a longitudinal axis (L), and
a lower end portion (13) that connects to the side wall (12),
the protective sleeve (10) having a recess in its lower end portion (13), and the lower end portion (13) having a bottom face (14) that is configured to delimit the side wall (12) in the direction of the longitudinal axis (L) of the protective sleeve (10), and the recess in the lower end portion (13) of the protective sleeve (10) being located in this bottom face (14) and, once the speed sensor (20) has been inserted into the protective sleeve (10), being filled by the plastic overmoulding (23) such that the plastic overmoulding (23) and the bottom face (14) terminate flush with one another,
in addition, the plastic overmoulding (23) further having a projection (231) that is designed in such a way that it can be inserted into the recess formed in the lower end portion (13) of the protective sleeve (10) and, after insertion, terminates flush with the bottom face (14) of the lower end portion (13) of the protective sleeve (10), and
the plastic overmoulding (23) is performed such that, once the speed sensor has been inserted into the protective sleeve, it has a layer of plastic of a defined layer thickness d between the sensor element (22) and the bottom face (14) of the protective sleeve (10).

2. A system according to the preceding claim, the recess in the lower end portion (13) of the protective sleeve (10) being arranged centrally in the bottom face (14).

3. A system according to either one of the preceding claims 1 and 2, once the speed sensor (22) has been inserted into the protective sleeve (10) the recess and the face of the sensor element (21) being arranged parallel to one another.

4. A system according to any one of the preceding claims, the protective sleeve (10) being configured with a round cross section symmetrically about the longitudinal axis (L).

5. A system according to any one of the preceding claims, the protective sleeve (10) extending in the direction of the longitudinal axis (L).

## Revendications

1. Système composé d'un capteur (20) de vitesse de rotation et d'un manchon (10) de protection, le capteur de vitesse de rotation comportant
un aimant (22) permanent, configuré pour faire naitre un champ magnétique,
au moins un élément (21) capteur prévu dans la zone du champ magnétique et configuré pour détecter la vitesse de rotation d'un élément (30) codeur associé au capteur de vitesse de rotation et la transformer en un signal électrique,
un surmoulage (23) en matière plastique disposé autour de l'aimant (22) permanent et de l'élément (21) capteur et configuré pour protéger les parties entourées et en immobiliser l'agencement,
dans lequel le capteur (20) de vitesse de rotation est configuré pour être inséré dans le manchon (10) de protection,
le manchon (10) de protection comportant
une partie (11) d'extrémité supérieure, configurée pour faire sortie les liaisons électriques du capteur (20) de vitesse de rotation du manchon (10) de protection,
une paroi (12) latérale, qui se raccorde à la partie (11) d'extrémité supérieure et qui s'étend dans la direction d'un axe (L) longitudinal, et
une partie (13) d'extrémité inférieure, qui se raccorde à la paroi (12) latérale,
dans lequel le manchon (10) de protection a, à sa partie (13) d'extrémité inférieure, un évidement et la partie (13) d'extrémité inférieure a une surface (14) de fond, configurée de manière à ce que la paroi (12) latérale délimite, dans la direction de l'axe (L) longitudinal, le manchon (10) de protection, et dans lequel l'évidement se trouve à la partie (13) d'extrémité inférieure du manchon (10) de protection, dans cette surface (14) de fond et, après l'insertion du capteur (20) de vitesse de rotation dans le manchon (10) de protection, est rempli par le surmoulage (23) en matière plastique, de manière à ce que le surmoulage (23) en matière plastique et la surface (14) de fond se raccordent au ras,
dans lequel en outre,
le surmoulage (23) en matière plastique a une saillie (231), qui est conformée de manière à pouvoir être insérée dans l'évidement formé à la partie (13) d'extrémité inférieure du manchon (10) de protection et de manière, après l'insertion, à se raccorder au ras avec la surface (14) de fond de la partie (13) d'extrémité inférieure du manchon (10) de protection, et
le surmoulage (23) en matière plastique est réalisé de manière à avoir, après l'insertion du capteur de vitesse de rotation dans le manchon de protection, entre l'élément (22) capteur et la surface (14) de fond du manchon (10) de protection, une couche de matière plastique d'une épaisseur d de couche définie.

2. Système suivant la revendication précédente, dans lequel l'évidement, à la partie (13) d'extrémité inférieure du manchon (10) de protection, est disposé au milieu de la surface (14) de fond.

3. Système suivant l'une des revendications 1 à 2 précédentes, dans lequel l'évidement et la surface de l'élément (21) capteur sont, après l'insertion du capteur (20) de vitesse de rotation dans le manchon (10) de protection, parallèles l'un à l'autre.

4. Système suivant l'une des revendications précédentes, dans lequel le manchon (10) de protection est formé de manière symétrique autour de l'axe (L) longitudinal en ayant une section transversale circulaire.

5. Système suivant la revendication précédente, dans lequel le manchon (10) de protection s'étend dans la direction de l'axe (L) longitudinal.
